# EUROPEAN PATENT SPECIFICATION

(11) **EP 2 452 563 B1**
(45) Date of publication and mention of the grant of the patent: **27.09.2017**
(21) Application number: 11188828.5
(22) Date of filing: 11.11.2011
(51) Int. Cl.: A21C 15/00

(54) **Apparatus for filling a bakery product and its use**
Vorrichtung zum Füllen von Backwaren und ihre Verwendung
Appareil pour remplir un produit de boulangerie et sa utilisation

(30) Priority: 12.11.2010 IT TO20100902
(43) Date of publication of application: 16.05.2012
(73) Proprietor: SOREMARTEC S.A., 2632 Findel (LU); Ferrero S.p.A., 12051 Alba (Cuneo) (IT)
(72) Inventor: Longo, Marco, I-12042 BRA (Cuneo) (IT)
(74) Representative: Rambelli, Paolo

(56) References cited:
- EP-A2- 1 683 970
- EP-A2- 2 123 162
- WO-A1-95/27424
- DE-A1- 19 838 550
- US-A- 3 871 274
- US-A1- 2005 087 079

## Description

The subject of the present invention is improvements in relation to an automated or semi-automated apparatus for filling a bakery product such as a bread roll, a pancake, or the like.

In particular, the invention relates to a filling apparatus of the type described in the Applicant's EP-A-2 123 162; this patent application describes an apparatus, in which the filling mass that is supplied to the bakery product which, in the case in question, is constituted by a bread roll or the like, is dosed by a dosing unit comprising a cylinder and a piston driven by drive means; the drive means are preferably constituted by a stepping motor which rotates a threaded rod of the piston so as to bring about axial movement of the piston inside the cylinder, achieving a constant dispensing rate during dosing.

US 3 871 274 A describes an apparatus for filling bakery products, according to the preamble of claim 1. The apparatus of US 3 871 274 comprises moreover a conveyor having a plurality of cake holders for conveying successive transverse rows of cakes horizontally, the cake holders holding a plurality of cakes side by side in each transverse row, an injecting station having a transverse row of nozzles with at least one nozzle for each cake position in the row, tilting means for tilting the cake holders adjacent the nozzles so that, during injection of filling material, each cake is tilted to allow a nozzle to be inserted into an exposed side wall of each cake.

DE 198 38 550 A1 describes a hand-held and manually-operating pump which discharges, especially jam, from a reservoir through a needle into e.g. doughnuts or similar foods. The pump consists essentially of a transparent bag, with a piston moving downwards by gravity, which has a screw-fit neck to the hand-held needle section.

EP 1 683 970 A2 describes a progressive cavity pump, also known with the term "eccentric screw pump".

An object of the present invention is to provide improvements to an apparatus of the above-mentioned type which are suitable for improving the dosing characteristics, particularly when the filling mass is constituted by a cream having a high viscosity such as, for example, the cream marketed under the trade mark NUTELLA®.

Another object of the invention, in a particular embodiment, is to provide an apparatus in which the dosing unit can be supplied exclusively by means of a filling mass which is held in a container that is encoded for use with the apparatus, excluding the possibility of the user or controller of the apparatus using alternative filling masses.

In view of these objects, a subject of the invention is an improved apparatus for filling a bakery product as defined in the appended claims, which constitute an integral part of the present description.

The apparatus according to the invention is characterised in that the dosing means, which are arranged to supply a predetermined quantity of the filling mass to the dispensing means, comprise a screw pump, with an eccentric screw, and in that the filling mass is supplied to said screw pump from a container, for example, of the cartridge type, which has an end wall that can slide sealingly along the walls of the container or from another container such as, for example, an interchangeable, flexible bag, connected to an intake of the suction section of the eccentric screw pump. With the use of a flexible bag, the suction effect of the eccentric screw pump causes progressive contraction of the bag during emptying.

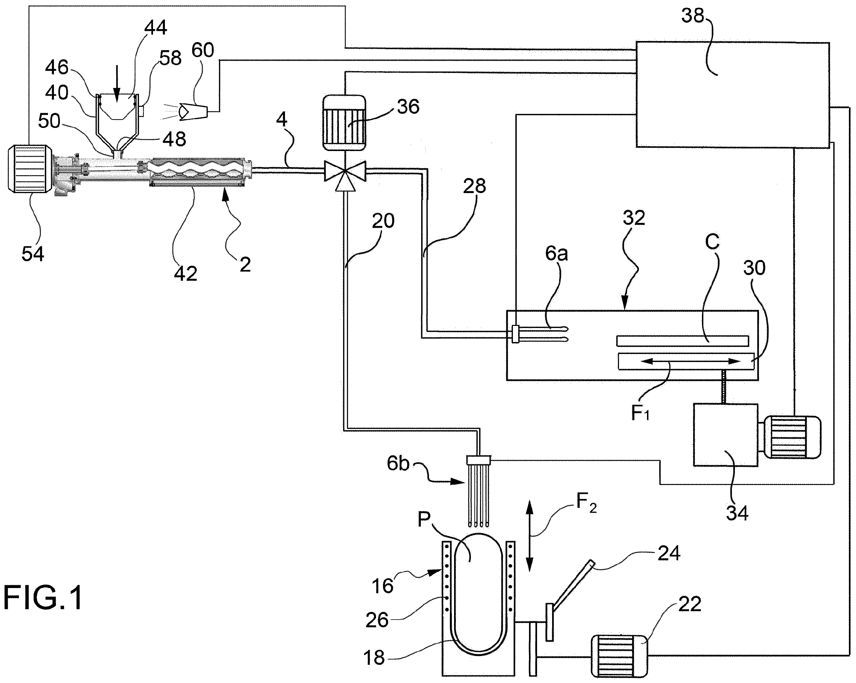

Further features and advantages of the apparatus according to the invention will become clear from the following detailed description which is given with reference to the appended drawing which shows, by way of non-limiting example, a functional diagram of the apparatus according to the invention.

The apparatus according to the invention is of the type comprising dosing means, generally indicated 2, which are arranged to supply a filling mass to dispensing means indicated 6a and 6b, respectively, through a duct 4.

In the diagram shown, there are two distinct dosing circuits which operate for the dosing of the filling mass into a bread roll, indicated P, and into a bakery product in sheet form such as, for example, a pancake or the like, indicated C, respectively.

The first dispensing circuit, which is known *per se*, is of the type described in EP-A-2 123 162 and comprises a supply duct 20 which supplies the filling mass to the dispensing means 6b which, in the case in question, comprise one or more pointed tubular members suitable for penetrating the bakery product which, in the case in question, is constituted by a bread roll P, in order to dispense the filling mass into its interior.

The bakery product P is housed in a supporting member 16 which is provided with a receiving seat 18 that surrounds the bakery product almost completely.

The supporting member 16 and the dispensing means are movable relative to one another, preferably vertically or horizontally, as indicated by the double arrow F2; in the currently preferred embodiment, the dispensing means 6b are static and the supporting member is movable vertically, driven by drive means 22; there is also a facility to move the supporting member 16 manually by means of a lever member 24.

A situation in which the supporting member 16 is static and the dispensing means 6b are movable vertically in order to penetrate the bakery product is also envisaged; in this case, the duct 20 to which the dispensing means 6b are connected may be flexible and comprise a flexible end section.

Adjacent the seat 18, the supporting member 16 advantageously has heating means constituted, for example, by one or more electrical resistances 26 to permit heating of the product P to be filled. The drive means 22 are also arranged to bring about the relative movement of the supporting member 16 away from the dispensing means 6b, from the filling position in which the dispensing means 6b penetrate the bakery product.

The filling operation is performed in accordance with that described in EP-A-2 123 162.

The second supply circuit is of the type described in EP 2392214 A1 and comprises a supply duct 28 which supplies the filling mass to dispensing means 6a which in turn are arranged to dispense the filling mass into a bakery product C; in the case in question, this is constituted by a pancake which is folded onto itself one or more times so as to define one or more pockets for receiving the filling.

In general, the dispensing means 6a are suitable for filling a bakery product comprising at least two sheets between which a space is defined for receiving the filling mass.

The dispensing means 6a thus cooperate with opening means (not shown) which are arranged to open out the sheets as a result of the relative movement of the bakery product and the dispensing means towards one another.

Here again, the apparatus comprises a supporting member 30 with a receiving seat for housing the bakery product C; the supporting member 30 and the dispensing means 6a are movable relative to one another, preferably horizontally, as shown by the double arrow F1.

The relative movement takes place between a first position in which the supporting member 30 and the dispensing means 6a are spaced apart with the supporting member 30 outside a housing 32 so as to allow the product C to be placed in the receiving seat of the supporting member and a second position in which the dispensing means penetrate the product C.

Drive means 34 provide for the relative movement between the supporting member 30 and the dispensing means 6a between the position for the loading of the product C into the supporting member and the filling position.

The apparatus according to the invention may comprise one or other of the two dispensing circuits described above or, optionally, both dispensing circuits, in which case the apparatus comprises a three-way valve 36, preferably a servo-controlled valve, which enables the filling mass to be supplied selectively to the dispensing means 6a or 6b.

The valve 36 is operated by means of a control and operating unit 38 provided with a selector which enables the operator to set the supply of the filling mass selectively to the dispensing means 6a or 6b.

According to a feature of the invention, the dosing means 2 comprise a screw pump 42, with an eccentric screw, also known by the term "mono-pump".

Eccentric screw pumps, are known and available commercially. For example, eccentric screw pumps for foodstuffs may be used.

The eccentric screw pump is driven preferably by an electric motor 54 which permits reversal of the direction of rotation of the screw. In particular, the selection of an eccentric screw pump of the above-mentioned type in apparatuses according to the invention, by virtue of its high suction capacity as will be explained more fully below, allows the use of a container for the filling mass which is connected to the suction side of the pump and the storage volume of which is variable and can be reduced as a result of the suction exerted by the pump.

Further advantages of the above-mentioned pumps are their suitability for contact with foodstuffs as well as the facility to reverse the direction of rotation of the rotor and hence also the direction of transportation; this feature is particularly useful within the filling process described above in connection with the dispensing means 6b.

As indicated above, the invention provides for the use of the above-mentioned eccentric screw pump in combination with a container 40 for the filling mass, the storage volume of which container can be reduced as a result of the suction exerted by the screw pump so as to bring about progressive emptying of the container in the absence of any drive means for bringing about the reduction in volume. The container may, for example, be constituted by a container of the interchangeable cartridge type, comprising a tubular containing wall and a movable wall 44 which is slidable along the tubular wall of the container, preferably in a vertical direction, although sliding in a horizontal or inclined direction is not excluded.

The wall or plate 44 preferably comprises one or more seats for housing one or more corresponding O-ring seals, indicated 46, so that the plate can slide freely along the walls of the container as a result of the suction effect exerted by the screw pump (in the absence of any drive means associated therewith).

The cartridge container has a dispensing mouth 48 which is connected to an intake 50 of the screw pump, on the suction side.

The operation of the pump gives rise to a suction effect which brings about the movement of the end wall or plate 44 towards the dispensing mouth, causing complete emptying of the cartridge during the operation of the pump.

Naturally, the wall or plate 44 may have a surface which faces the dispensing mouth and which is shaped so as to give rise to complete emptying of the cartridge.

Alternatively, the container 40 may be a container with a collapsible wall such as, for example, a bag-like container formed by a sheet of flexible plastics material.

The use of an eccentric screw pump, achieves accurate dosing
and a suitable supply of filling masses, even of high viscosity, in particular, with a viscosity of between 5000 mPa·s and 15000 mPa·s (26°C, IOCCC Method 46-2000), contained in a container with a movable wall (but without any drive means for the movable wall) or a collapsible container of the type described above.

In a preferred embodiment, identifying means such as, for example, a bar code, a magnetic code, or a digital chip (tag) are associated with the container for the filling substance and reading means, associated with the filling apparatus or with the dosing means or, specifically, with the supply pump, are arranged to read the identifying means and to send to a control unit 38 a signal of recognition of the identifying means, upon receipt of which the control unit allows the dosing and filling cycle to start.

Purely by way of indication, the identifying means associated with the cartridge are indicated 58 and the reading means are indicated 60; the reading means 60 communicate with the control and operating unit 38 which is arranged to operate the drive means 54 upon recognition of the identification signal.

The invention thus provides an apparatus in which the filling mass can be contained in easily interchangeable, disposable containers, providing the user with a guarantee of the provenance and quality of the product.

The filling apparatus is preferably of a size suitable for use in a public place. The above-described functional circuit, comprising the dispensing means 6a or 6b or both, is accommodated in a housing which has at least one opening for the connection of the container 40 to the above-mentioned screw pump.

The apparatus may be configured as an apparatus that can be activated by means of a slot machine associated with the housing and may also be provided with selector means which allow the user to select predetermined parameters of the filling.

The housing in which the dispensing circuit is placed preferably comprises means suitable for bringing about a circulation of hot air inside the housing to keep the environment thermally regulated or, alternatively, thermostatic control means with electrical resistances may be provided.

## Claims

1. An apparatus for filling a bakery product, comprising:
- a supporting member (16, 30) provided with a receiving seat (18) suitable for supporting the product (C, P) to be filled;
- dispensing means (6a, 6b) arranged to penetrate the product (C, P) and to dispense filling mass into it;
- drive means (34, 22) suitable for causing a relative movement of the supporting member relative to the dispensing means between a position for the loading of the product (C, P) into the supporting member (16, 30) and a filling position in which the dispensing means (6a, 6b) penetrate the product, and
- dosing means (2) suitable for supplying a predetermined amount of filling mass to the dispensing means (6a, 6b),
wherein the dosing means (2) include a screw pump (42) and a container (40) which contains the filling mass and is sealingly connected to an intake of the suction side of the screw pump (42), **characterised in that** the screw pump (42) is a pump with an eccentric screw and **in that** said container (40) features a storage volume that can be reduced by the suction effect exerted by said eccentric screw pump.

2. An apparatus according to claim 1, **characterised in that** the container (40) includes identifying means (58) and **in that** the apparatus includes reading means (60) arranged to read the identifying means (58) and a control and operating unit (38) which is arranged to receive from the reading means (60) a signal identifying the container (40) and which is arranged to operate said dosing means (2) as a result of the receipt of the identification signal.

3. An apparatus according to any one of the preceding claims, **characterised in that** the supporting member (16, 30) comprises heating means associated with the receiving seat, for heating the bakery product (C, P) housed therein.

4. An apparatus according to any of one the preceding claims, **characterised in that** said screw pump (42) comprises an electric motor (54) suitable for permitting reversal of the direction of rotation of the screw.

5. An apparatus according to any one of the preceding claims, **characterised in that** it comprises a housing for the dispensing means (6a, 6b), for the drive means (34, 22), and for said screw pump (42), the housing being equipped with an opening for the fitting of the container (40) in an intake seat of said screw pump (42).

6. An apparatus according to claim 5, **characterised in that** means for the supply of hot air inside the housing or electrical heating means, are associated with the housing.

7. An apparatus according to any one of the preceding claims, **characterised in that** the container (40) is a container with a collapsible containing wall, particularly a bag made of flexible plastics material.

8. An apparatus according to any one of claims 1 to 6, **characterised in that** the container (40) has a rigid containing wall and at least one movable wall (44) which is slidable sealingly along the containing wall.

9. An apparatus according to claim 8, **characterised in that** the container is a cartridge container comprising a rigid tubular containing wall and a movable end wall (44) including at least one seal (46) which allows the movable wall to slide sealingly along the containing wall.

10. Use of an apparatus according to any one of Claims 1 to 9 for filling a bakery product with an edible filling mass having a viscosity of from 5000 mPa·s to 15000 mPa·s (26°C, IOCCC Method 46-2000).

## Patentansprüche

1. Eine Vorrichtung zum Füllen eines Backwarenprodukts, aufweisend:
- ein Tragelement (16, 30), das mit einem Haltesitz (18) versehen ist, der geeignet ist, das zu füllende Produkt (C, P) zu tragen;
- Abgabemittel (6a, 6b), das so angeordnet ist, das in das Produkt (C, P) eindringt und die Füllmasse abgibt;
- Antriebsmittel (34, 22), das geeignet ist, eine Relativbewegung des Tragelements relativ zum Abgabemittel zwischen einer Position zum Laden des Produkts (C, P) in das Tragelement (16, 30) und einer Füllposition, in der das Abgabemittel (6a, 6b) das Produkt eindringt, zu bewirken und
- Dosiermittel (2), das zum Zuführen einer vorbestimmten Menge an Füllmasse zum Abgabemittel (6a, 6b) geeignet ist,
wobei das Dosiermittel (2) eine Schneckenpumpe (42) und einen die Füllmasse enthaltenden Behälter (40) aufweist, der mit einem Einlass der Saugseite der Schneckenpumpe (42) dichtend verbunden ist, **dadurch gekennzeichnet, dass** die Schneckenpumpe (42) eine Pumpe mit einem Exzenterrotor ist und dass der Behälter (40) ein Speichervolumen aufweist, das durch die von der Exzenterschneckenpumpe ausgeübte Saugwirkung verringert werden kann.

2. Die Vorrichtung nach Anspruch 1, **dadurch gekennzeichnet, dass** der Behälter (40) eine Identifizierungsmittel (58) aufweist und dass die Vorrichtung ein Lesemittel (60), das für das Lesen des Identifizierungsmittels (58) angeordnet ist, und eine Steuer- und Bedieneinheit (38) aufweist, die so angeordnet ist, dass sie von dem Lesemittel (60) ein den Behälter (40) identifizierendes Signal empfängt, dass sie das Dosiermittel (2) als Ergebnis des Empfangs des Identifizierungssignals betreibt.

3. Die Vorrichtung nach einem der vorhergehenden Ansprüche, **dadurch gekennzeichnet, dass** das Tragelement (16, 30) das mit dem Haltesitz verbundene Heizmittel zum Erwärmen des untergebrachten Backwarenprodukts (C, P) darin aufweist.

4. Die Vorrichtung nach einem der vorhergehenden Ansprüche, **dadurch gekennzeichnet, dass** die Schneckenpumpe (42) einen Elektromotor (54) aufweist, der geeignet ist, eine Umkehr der Drehrichtung des Rotors zu ermöglichen.

5. Die Vorrichtung nach einem der vorhergehenden Ansprüche, **dadurch gekennzeichnet, dass** sie ein Gehäuse für das Abgabemittel (6a, 6b), für das Antriebsmittel (34, 22), und für die Schneckenpumpe (42) aufweist, wobei das Gehäuse mit einer Öffnung zum Anbringen des Behälters (40) in einem Einlasssitz der Schneckenpumpe (42) versehen ist.

6. Die Vorrichtung nach Anspruch 5, **dadurch gekennzeichnet, dass** ein Versorgungsmittel der Heißluft im Inneren des Gehäuses oder elektrisches Heizmittel mit dem Gehäuse verbunden ist.

7. Die Vorrichtung nach einem der vorhergehenden Ansprüche, **dadurch gekennzeichnet, dass** der Behälter (40) ein Behälter mit einer zusammenlegbaren Umfangswand ist, insbesondere ein Beutel aus flexiblem Kunststoff.

8. Die Vorrichtung nach einem der Ansprüche 1 bis 6, **dadurch gekennzeichnet, dass** der Behälter (40) eine starre Umfangswand und mindestens eine bewegliche Wand (44) aufweist, die entlang der Umfangswand dichtend verschiebbar ist.

9. Die Vorrichtung nach Anspruch 8, **dadurch gekennzeichnet, dass** der Behälter ein Patronenbehälter ist, der eine starre rohrförmige Umfangswand und eine bewegliche Endwand (44) aufweist, die mindestens eine Dichtung (46) aufweist, die es ermöglicht, dass die bewegliche Umfangswand dichtend entlang der Aufnahmewand gleitet.

10. Verwendung einer Vorrichtung nach einem der Ansprüche 1 bis 9, zum Füllen eines Backwarenprodukts mit einer essbaren Füllmasse mit einer Viskosität von 5000 mPa·s bis 15000 mPa·s (26 °C, IOCCC-Methode 46-2000).

## Revendications

1. Appareil pour remplir un produit de boulangerie, comprenant :
- un élément de support (16, 30) doté d'un siège de réception (18) adapté pour supporter le produit (C, P) à remplir ;
- des moyens de distribution (6a, 6b) agencés pour pénétrer le produit (C, P) et pour distribuer la masse de remplissage en lui ;
- des moyens d'entraînement (34, 22) adaptés pour entraîner un mouvement relatif de l'élément de support par rapport aux moyens de distribution entre une position pour le chargement du produit (C, P) dans l'élément de support (16, 30) et une position de remplissage dans laquelle les moyens de distribution (6a, 6b) pénètrent le produit, et
- des moyens de dosage (2) adaptés pour fournir une quantité prédéterminée de masse de remplissage aux moyens de distribution (6a, 6b),
dans lequel les moyens de dosage (2) incluent une pompe à vis (42) et un contenant (40) qui contient la masse de remplissage et est relié de manière étanche à une admission du côté aspiration de la pompe à vis (42), **caractérisé en ce que** la pompe à vis (42) est une pompe avec une vis excentrique et **en ce que** ledit contenant (40) présente un volume de stockage qui peut être réduit par l'effet d'aspiration exercé par ladite pompe à vis excentrique.

2. Appareil selon la revendication 1, **caractérisé en ce que** le contenant (40) inclut des moyens d'identification (58) et **en ce que** l'appareil inclut des moyens de lecture (60) agencés pour lire les moyens d'identification (58) et une unité de commande et de fonctionnement (38) qui est agencée pour recevoir à partir des moyens de lecture (60) un signal identifiant le contenant (40) et qui est agencée pour actionner lesdits moyens de dosage (2) suite à la réception du signal d'identification.

3. Appareil selon l'une quelconque des revendications précédentes, **caractérisé en ce que** l'élément de support (16, 30) comprend des moyens de chauffage associés au siège de réception, pour le chauffage du produit de boulangerie (C, P) logé dans celui-ci.

4. Appareil selon l'une quelconque des revendications précédentes, **caractérisé en ce que** ladite pompe à vis (42) comprend un moteur électrique (54) adapté pour permettre l'inversion de la direction de rotation de la vis.

5. Appareil selon l'une quelconque des revendications précédentes, **caractérisé en ce qu'**il comprend un logement pour les moyens de distribution (6a, 6b), pour les moyens d'entraînement (34, 22) et pour ladite pompe à vis (42), le logement étant équipé d'une ouverture pour l'insertion du contenant (40) dans un siège d'admission de ladite pompe à vis (42).

6. Appareil selon la revendication 5, **caractérisé en ce que** des moyens pour la fourniture d'air chaud dans le logement ou des moyens de chauffage électrique sont associés au logement.

7. Appareil selon l'une quelconque des revendications précédentes, **caractérisé en ce que** le contenant (40) est un contenant avec une paroi de contenance pliable, particulièrement un sac réalisé en un matériau plastique flexible.

8. Appareil selon l'une quelconque des revendications 1 à 6, **caractérisé en ce que** le contenant (40) présente une paroi de contenance rigide et au moins une paroi mobile (44) qui est coulissante de manière étanche le long de la paroi de contenance.

9. Appareil selon la revendication 8, **caractérisé en ce que** le contenant est un contenant à cartouche comprenant une paroi de contenance tubulaire rigide et une paroi d'extrémité mobile (44) incluant au moins un joint (46) qui permet à la paroi mobile de coulisser de manière étanche le long de la paroi de contenance.

10. Utilisation d'un appareil selon l'une quelconque des revendications 1 à 9 pour le remplissage d'un produit de boulangerie avec une masse de remplissage comestible présentant une viscosité de 5 000 mPa•s à 15 000 mPa•s (26 °C, méthode IOCCC 46-2000).
